# EUROPEAN PATENT APPLICATION

(11) **EP 2 154 175 A1**
(43) Date of publication of application: **17.02.2010**
(21) Application number: 09164525.9
(22) Date of filing: 03.07.2009
(51) Int. Cl.: C08G 77/18, C08G 77/44, C08G 77/58, C08L 83/04, C08L 83/14

(54) **Silicone resin composition containing fine inorganic particles**

(30) Priority: 06.08.2008 JP 2008203048
(71) Applicant: Nitto Denko Corporation, Ibaraki-shi Osaka (JP)
(72) Inventor: Hirano, Keisuke, Osaka (JP)
(74) Representative: HOFFMANN EITLE

(57) **Abstract**

A silicone resin composition comprising fine inorganic particles, wherein the silicone resin composition is obtained by a step comprising reacting (A) a bifunctional alkoxysilane and/or a dual end-disilanol, and (B) a compound having an alkoxysilyl group at an end of a molecule, in the presence of a dispersion of said fine inorganic particles. The silicone resin composition of the present invention can be suitably used for, for example, encapsulating materials, coating materials, molding materials, surface-protecting materials, adhesive agents, bonding agents, and the like.

## Description

### BACKGROUND OF THE INVENTION

### Field of the Invention

The present invention relates to a silicone resin composition containing fine inorganic particles.

### Discussion of the Related Art

Silicone resins are used for coating materials, molding materials, encapsulating materials, surface-protecting materials, adhesive agents, bonding agents, and the like. In addition, in order to improve the hardness or strength of a coating film, or to improve refractive index, it is known to include fine inorganic particles in a resin. However, the surface of fine inorganic particles is in general hydrophilic, and silicone resins are hydrophobic, thereby making it difficult to disperse the fine inorganic particles, so that the fine inorganic particles are aggregated and become opaque.

In view of the above, in order to disperse fine inorganic particles, Japanese Patent Laid-Open No. 2004-35632 discloses a method of dispersing an inorganic oxide in an oil phase, wherein the inorganic oxide has a primary particle size adjusted to a specified range with a mill. Japanese Patent Laid-Open No. Hei-5-111631 discloses a method of dispersing fine inorganic particles, including the step of blending an organopolysiloxane having a specified weight-average molecular weight and a specified hydrophilic functional group equivalence, and fine inorganic particles in a specified ratio. Further, Japanese Patent Laid-Open No. 2007-270055 discloses a polysiloxane composition containing fine metal oxide particles, obtained by the step of mixing a specified polyfunctional polysiloxane and fine metal oxide particles in an organic solvent in the presence of a metal chelating compound, thereby dispersing the above fine metal oxide particles in the organic solvent, and the like.

### SUMMARY OF THE INVENTION

The present invention relates to a silicone resin composition containing fine inorganic particles, wherein the silicone resin composition is obtained or obtainable by a step including reacting (A) a bifunctional alkoxysilane and/or a dual end-disilanol, and (B) a compound having an alkoxysilyl group at an end of a molecule, in the presence of a dispersion of the fine inorganic particles.

### DETAILED DESCRIPTION OF THE INVENTION

In Japanese Patent Laid-Open No. 2004-35632, the improvement in transparency, or the like is achieved by adjusting to a specified primary particle size, and the dispersion is carried out with a mill in order to adjust to a specified primary particle size. Also, in Japanese Patent Laid-Open No. Hei-5-111631, an ultrasonic homogenizer treatment or the like is applied in a dispersion step in Examples in order to achieve sufficient dispersion. Likewise in Japanese Patent Laid-Open No. 2007-270055, a dispersion treatment with a beads mill is carried out in Examples. As described above, a dispersion treatment is generally carried out in order to exhibit the properties of fine inorganic particles. However, a long dispersion time may be necessitated for the dispersion treatment in some cases, so that there is a disadvantage that crystals of the fine inorganic particles and the like are disintegrated, thereby lowering the performance and the like. In view of the above, it is desired that fine inorganic particles are dispersed in a resin without carrying out a dispersion treatment.

The present invention relates to a silicone resin composition in which fine inorganic particles are stably dispersed in a silicone resin without carrying out a dispersion treatment, the silicone resin composition being capable of having a high refractive index and/or high transparency.

The silicone resin composition of the present invention exhibits some excellent effects that fine inorganic particles are stably dispersed in a silicone resin without carrying out a dispersion treatment, the silicone resin composition being capable of having a high refractive index and/or high transparency.

These and other advantages of the present invention will be apparent from the following description.

A feature of the silicone resin composition of the present invention is in that the silicone resin composition is obtained by a step including reacting (A) a bifunctional alkoxysilane and/or a dual end-disilanol, and (B) a compound having an alkoxysilyl group at an end of a molecule, in the presence of a dispersion of fine inorganic particles. The resin composition contains fine inorganic particles in a silicone resin in a homogeneous and dispersed state.

In the resin composition, the bifunctional alkoxysilane and the dual end-disilanol of the component (A), and the compound having an alkoxysilyl group at an end of a molecule of the component (B) are independently reacted with the surface of the fine inorganic particles and at the same time polymerized, to form a silicone resin. Therefore, it is considered that dispersibility of the fine inorganic particles is excellent, so that the resin composition is capable of having a high refractive index and/or high transparency.

It is preferable that the bifunctional alkoxysilane is a compound represented by the formula (1): 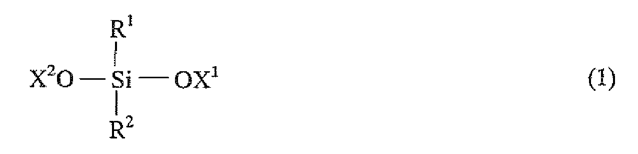 wherein each of R¹ and R² is independently an alkyl group or a phenyl group, and each of X¹ and X² is independently an alkyl group.

Each of R¹ and R² in the formula (1) is independently an alkyl group or a phenyl group, and the alkyl group has the number of carbon atoms of preferably from 1 to 18, more preferably from to 12, and even more preferably from 1 to 6, from the viewpoint of controlling hydrophilicity/hydrophobicity of the surface of the particles, efficiency of polycondensation reaction of the alkoxysilane, and the like. Specific examples of the alkyl group include a methyl group, an ethyl group, a propyl group, an isopropyl group, and the like. Among them, it is preferable that each of R¹ and R² is independently a methyl group.

Each of X¹ and X² in the formula (1) is independently an alkyl group, and the alkyl group has the number of carbon atoms of preferably from 1 to 4, and more preferably from 1 to 2, from the viewpoint of reactivity at the surface of the particles, a rate of hydrolysis, and the like. Specific examples of the alkyl group include a methyl group, an ethyl group, and the like. Among them, it is preferable that both of X¹ and X² are a methyl group.

The bifunctional alkoxysilane represented by the formula (1) includes diphenyldimethoxysilane, dimethyldimethoxysilane, dimethyldiethoxysilane, diphenyldiethoxysilane, diethyldimethoxysilane, diethyldiethoxysilane, diisopropyldimethoxysilane, diisopropyldiethoxysilane, methylphenyldimethoxysilane, methylphenyldiethoxysilane, and the like, and these bifunctional alkoxysilanes can be used alone or in a combination of two or more kinds. Among them, dimethyldimethoxysilane where both R¹ and R² are a methyl group, and both X¹ and X² are a methyl group is preferred.

A commercially available product of the bifunctional alkoxysilane represented by the formula (1) is exemplified by KBM22 (dimethyldimethoxysilane) commercially available from Shin-Etsu Chemical Co., Ltd., and the like.

It is preferable that the dual end-disilanol is a compound represented by the formula (2): 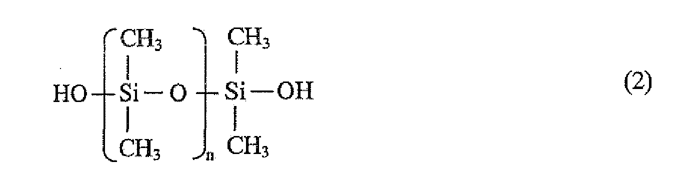 wherein n is an integer of 1 or more.
n in the formula (2) is an integer of 1 or more, and preferably an integer of from 2 to 10.

A commercially available product of the dual end-disilanol represented by the formula (2) is exemplified by X-21-3153 commercially available from Shin-Etsu Chemical Co., Ltd., and the like.

The bifunctional alkoxysilane represented by the formula (1) and/or the dual end-disilanol represented by the formula (2) is used in an amount of preferably from 5 to 20% by weight, and more preferably from 10 to 20% by weight, of the mixture subjected to the reaction, from the viewpoint of accomplishment of a high refractive index, reaction efficiency at the surface of the particles, and efficiency of the polycondensation reaction of the silanes themselves.

In one embodiment, it is preferable that the compound having an alkoxysilyl group at an end of a molecule is a poly(dimethyl siloxanes) containing a methoxy group in an amount of from 10 to 50% by weight. It is preferable that the above compound is, for example, a compound at least having one or more dimethyl siloxane structures, and a structure in which one or more methoxy groups are bound to a silicon atom at a molecular end.

In addition, the above poly(dimethyl siloxanes) contains a methoxy group in an amount of preferably from 10 to 50% by weight, and more preferably from 20 to 50% by weight, from the viewpoint of reactivity at the surface of the particles, and efficiency of the polycondensation reaction of the silanes themselves. The amount of the methoxy group contained is expressed by a ratio of molecular weights of the methoxy group to the entire compound.

A commercially available product of the poly(dimethyl siloxanes) containing a methoxy group in an amount of from 10 to 50% by weight is exemplified by KC-89 (commercially available from Shin-Etsu Chemical Co., Ltd.), KR-500 (commercially available from Shin-Etsu Chemical Co., Ltd.), X-40-9225 (commercially available from Shin-Etsu Chemical Co., Ltd.), and the like.

In another embodiment, it is preferable that the compound having an alkoxysilyl group at an end of a molecule is a compound represented by the formula (3): 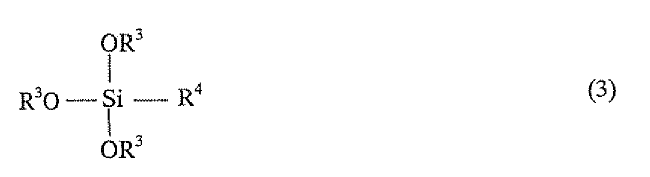 wherein each of R³, which may be identical or different, is a C1-4 alkyl group, and R⁴ is a monovalent organic group.

Each of R³ in the formula (3), which may be identical or different, is a C1-4 alkyl group, and specific examples thereof include a methyl group, an ethyl group, a propyl group, an isopropyl group, and a butyl group. Among them, it is preferable that all of R³ are a methyl group.

R⁴ in the formula (3) is a monovalent organic group, which can be various functional groups for giving the physical properties depending upon the applications of the silicone resin composition containing the fine inorganic particles. Examples of the monovalent organic group include an alkyl group, a phenyl group, a glycidyl group, a vinyl group, an epoxycyclohexyl group, an amino group, a thiol group, and the like. In addition, these groups (for example, a glycidyl group) may optionally contain other atoms, for example, an oxygen atom, or the like. Also, R⁴ may be a group in which the above groups are combined. Specific examples thereof include a methacryloxypropyl group, a glycidoxypropyl group, an epoxycyclohexylethyl group, an aminopropyl group, and the like.

The compound represented by the formula (3) includes 2-((3,4)-epoxycyclohexyl)ethyltrimethoxysilane, 3-methacryloxypropyltrimethoxysilane, 3-glycidoxypropyltrimethoxysilane, phenyltrimethoxysilane, methyltrimethoxysilane, ethyltrimethoxysilane, propyltrimethoxysilane, hexyltrimethoxysilane, decyltrimethoxysilane, (3-aminopropyl)trimethoxysilane, and the like, and these compounds can be used alone or in a combination of two or more kinds.

Commercially available products of the compound represented by the formula (3) are exemplified by
KBM503 (3-methacryloxypropyltrimethoxysilane),
KBM403 (3-glycidoxypropyltrimethoxysilane),
KBM303 [2-((3,4)-epoxycyclohexyl)ethyltrimethoxysilane],
KBM903 [(3-aminopropyl)trimethoxysilane], each commercially available from Shin-Etsu Chemical Co., Ltd., and the like.

In still another embodiment, it is preferable that the compound having an alkoxysilyl group at an end of a molecule is a compound represented by the formula (4): 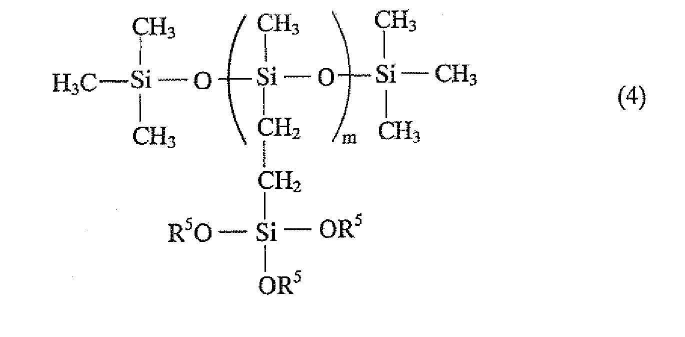 wherein each of R⁵, which may be identical or different, is a C1-4 alkyl group, and m is an integer of 1 or more.

Each of R⁵ in the formula (4), which may be identical or different, is a C1-4 alkyl group, and specific examples thereof include a methyl group, an ethyl group, a propyl group, an isopropyl group, and a butyl group. Among them, it is preferable that all of R⁵ are a methyl group. m in the formula (4) is an integer of 1 or more, and preferably an integer of from 1 to 10.

The compound represented by the formula (4) can be produced by, for example, mixing methylhydrogen silicone oil and vinyltrimethoxysilane in toluene, sufficiently subjecting the mixture to nitrogen replacement, adding a platinum catalyst thereto, reacting the components at 80°C for 5 hours, cooling to room temperature, and distilling off the solvent, without being limited thereto.

It is preferable that (A) the bifunctional alkoxysilane and/or the dual end-disilanol, and (B) the compound having an alkoxysilyl group at an end of a molecule (for example, the poly(dimethyl siloxanes) containing a methoxy group in an amount of from 10 to 50% by weight, the compound represented by the formula (3), and the compound represented by the formula (4)), which are used in the reaction in the presence of a dispersion of the fine inorganic particles, are blended, so as to have a weight ratio, i.e. (a total amount of the bifunctional alkoxysilane and the dual end-disilanol)/(a total amount of the compounds having an alkoxysilyl group at an end of a molecule (the poly(dimethyl siloxanes) containing a methoxy group in an amount of from 10 to 50% by weight, the compound represented by the formula (3), and the compound represented by the formula (4))), of preferably from 3/1 to 1/3, more preferably from 3/1 to 1/2, and even more preferably from 2/1 to 1/2, from the viewpoint of solubility to the solvent, and hardness and strength of a coating film obtained by curing the composition.

The fine inorganic particles usable in the present invention may be any ones that would not impair the effects of the present invention, and the fine inorganic particles are preferably hydrophilic fine particles, and more preferably hydrophilic fine particles of oxides, sulfides, compound oxides, composites thereof, and the like. More specifically, examples thereof include particles of oxides, sulfides, various compound oxides, or composites thereof, each containing a metal or nonmetal element, such as Si, Al, Ti, Zr, Fe, Ba, Zn, Cu, Cr, Nb, Ce, Mn, Sn, Cd, Se, Li, or Co, and the like.

Specific examples of the fine inorganic particles are preferably particles of one or more compounds selected from the group consisting of silica, titanium oxide, zirconium oxide, barium titanate, lithium niobate, cadmium selenide, copper oxide, hematite, iron oxide, alumina, zinc oxide, chromium oxide, niobium oxide, alumina-titania mixed oxide, alumina-zirconia mixed oxide, iron titanate, iron silicate, cerium oxide, manganese oxide, tin oxide, barium zirconate, zinc sulfide, cadmium sulfide/cadmium selenide, and lithium cobalt oxide. Among them, silica, titanium oxide, zirconium oxide, barium titanate, zinc sulfide, cerium oxide, zinc oxide, and iron oxide are preferred, from the viewpoint of making it more likely to synthesize fine particles having small particle sizes and narrow particle size distribution. These particles can be used alone or in a combination of two or more kinds.

Since the surface of the above fine inorganic particles has a structure having a surface functional group reactive with an alkoxysilyl group, it is considered that the reaction in the present invention can be carried out.

The fine inorganic particles have an average primary particle size of preferably from 1 to 100 nm, more preferably from 1 to 80 nm, and even more preferably from 1 to 50 nm, from the viewpoint of obtaining excellent transparency even in a state where the fine inorganic particles are dispersed in a silicone resin in a high concentration. The average primary particle size can be measured by determination of particle sizes of a dispersion of particles according to a dynamic light scattering method, or a direct observation with a transmission electron microscope. The average primary particle size as used herein means a value obtained by determination of particle sizes of a dispersion of particles according to a dynamic light scattering method.

In the present invention, it is preferable that the fine inorganic particles are prepared in a dispersion (also referred to as "dispersion of fine inorganic particles"). The medium for dispersing the fine inorganic particles includes, for example, water, methanol, ethanol, 2-propanol, butanol, 2-methoxyethanol, ethylene glycol, butanediol, propanediol, propylene glycol, and the like. Among them, it is preferable to use at least one member selected from the group consisting of water, methanol, ethanol, and 2-propanol. The fine inorganic particles in the dispersion are in an amount (solid content) of preferably from 1 to 60% by weight, more preferably from 10 to 50% by weight, and even preferably from 20 to 50% by weight, from the viewpoint of efficiently carrying out the reaction at the surface of the particles.

In addition, the dispersion of fine inorganic particles can be produced as follows. For example, (1) a dispersion of fine silica particles is obtained by, adding a 28% hydrochloric acid to a mixture of tetraethoxysilane and a water/methanol solution, while stirring, and allowing the mixture to hydrolyze overnight at room temperature. (2) A dispersion of fine titanium oxide particles is obtained by adding nitric acid and water to a mixture of titanium tetraisopropoxide and ethanol, while stirring, and reacting the components at 80°C for 2 hours. (3) A dispersion of fine barium titanate particles is obtained by adding a mixture of titanium isopropoxide and 2-propanol to a mixture of barium diisopropoxide and 2-propanol, adding acetyl acetone to the mixture, reacting the components at 80°C for 2 hours, adding acetic acid, water, and 2-propanol to the reaction mixture, and further reacting the components at 80°C for 48 hours. (4) A dispersion of fine zinc sulfide particles is obtained by using a co-precipitation method according to a known publication (J. Lumin., 92, 73, 2001). (5) A dispersion of fine cerium oxide particles is obtained by using a hydrothermal synthesis method according to a known publication (Chem. Lett., 35(8), 944, 2006). (6) A dispersion of fine iron oxide particles is obtained by a method including the steps of mixing FeCl₂-nH₂O and FeCl₃-6H₂O in water, and dropping an aqueous ammonia of which pH is adjusted to the mixture, while stirring. In addition, those dispersions obtained by methods other than those mentioned above may be used.

Regarding commercially available products of the dispersion of fine inorganic particles, for example, a dispersion of fine titanium oxide particles of NEOSUNVEIL or QUEEN TITANIC Series commercially available from Catalyst & Chemicals Ind. Co., Ltd. (CCIC), or Tynoc commercially available from Taki Chemical Co., Ltd.; a dispersion of fine zirconium oxide particles of ZSL Series commercially available from Daiichi Kigenso Kagaku Kogyo Co., Ltd., NZD Series commercially available from Sumitomo Osaka Cement Co., Ltd., or Nano-Use Series commercially available from Nissan Chemical Industries, Ltd.; a dispersion of fine zinc oxide particles of Zn Series commercially available from Sumitomo Osaka Cement Co., Ltd.; or the like can be used.

When the above components are subjected to the reaction in the presence of the dispersion of fine inorganic particles, besides the above components, a component such as water, ethanol, methanol, 2-propanol, or methyl ethyl ketone may be contained, from the viewpoint of solubility of the reaction compound. The component is used in an amount of preferably from 1 to 70% by weight, and more preferably from 30 to 60% by weight, of the mixture subjected to the reaction.

In the present invention, the mixture is subjected to the reaction using the above components, and the reaction includes, for example, mixing (A) a bifunctional alkoxysilane and/or a dual end-disilanol, (B) a compound having an alkoxysilyl group at an end of a molecule, water, and the like, in the presence of a dispersion of fine inorganic particles, and reacting the components at a temperature of preferably from 20° to 80°C, and more preferably from 40° to 60°C, for preferably from 1 to 6 hours, and more preferably from 2 to 4 hours while stirring, without being limited thereto.

In addition, after the termination of the reaction, the reaction mixture is cooled to room temperature, and/or the solvent is distilled off under a reduced pressure or under an unreduced pressure, whereby a silicone resin composition can be obtained. Also, the solid content of the fine inorganic particles may be adjusted by distilling off the solvent, or adding water to the reaction mixture.

The fine inorganic particles have a solid content of preferably from 10 to 50% by weight, and more preferably from 20 to 50% by weight, of the silicone resin composition, from the viewpoint of strength of the composition, and hardness of the coating film.

It is preferable that the silicone resin composition has a viscosity (at 25°C) of, for example, preferably from 300 to 20000 mPa•s, and more preferably from 3000 to 10000 mPa•s.

For example, a silicone resin composition is applied directly on a glass plate in an appropriate thickness according to a method such as casting, spin-coating, roll-coating, or the like, and drying an applied coating at a temperature of preferably from 50° to 150°C for preferably 1 to 3 hours, whereby a cured product made from the silicone resin composition can be produced, and the cured product can be properly treated depending upon the applications. It is preferable that the coating film obtained from the silicone resin composition is formed so as to have a thickness of preferably from 1 to 500 µm, and more preferably from 100 to 400 µm.

The silicone resin composition of the present invention can be suitably used for encapsulating materials, coating materials, molding materials, surface-protecting materials, adhesive agents, bonding agents, and the like.

Especially, in a case where a silicon resin composition is used for an encapsulating material, the silicone resin composition is suitably used for, for example, photosemiconductor devices mounted with blue or white LED elements (backlights for liquid crystal displays, traffic lights, outdoor big displays, advertisement sign boards, and the like). The photosemiconductor device can be produced by encapsulating, for example, LED elements with the above-mentioned resin composition. Specifically, a photosemiconductor device can be produced by, for example, applying a silicone resin composition of the present invention in an appropriate thickness to a substrate mounted with LED elements according to the above method, and heating and drying the coating under the above conditions, thereby encapsulating the photosemiconductor elements.

In addition, in a case where a silicone resin composition is used for an adhesive agent or a bonding agent, the silicone resin composition may be applied to a substrate in a given thickness, and cured at 20° to 150°C.

### EXAMPLES

The following examples further describe and demonstrate embodiments of the present invention. The examples are given solely for the purposes of illustration and are not to be construed as limitations of the present invention.

### Example 1

### (Preparation of Dispersion of Fine Silica Particles)

Five grams of tetraethoxysilane was added to 100 g of a 5% water-containing methanol solution, and 0.1 g of a 28% hydrochloric acid was added thereto, while stirring, and the components were allowed to be hydrolytically reacted overnight at room temperature, to synthesize fine silica particles having an average primary particle size of from 5 to 10 nm. The solvents were distilled off under a reduced pressure, and the residue was concentrated to a solid content of the fine silica particles of 30% by weight.

### (Preparation of Silicone Resin Composition)

In a container equipped with a stirrer, a reflux condenser, and a nitrogen inlet tube, 10 g of methanol, 10 g of 2-propanol, 5 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 5 g of a poly(dimethyl siloxanes) containing a methoxy group in an amount of 45% by weight (trade name: KC-89, commercially available from Shin-Etsu Chemical Co., Ltd.), which is a compound having an alkoxysilyl group at an end of a molecule, were added to 10 g of the above dispersion of fine silica particles (solid content: 30% by weight), and the components were reacted at 60°C for 3 hours, while stirring. After the termination of the reaction, the solvents were distilled off under a reduced pressure, and the residue was concentrated to a solid content of fine silica particles of 37% by weight, to give a silicone resin composition containing fine silica particles. Here, the weight ratio of the bifunctional alkoxysilane to the compound having an alkoxysilyl group at an end of a molecule was 1/1.

### (Use)

The silicone resin composition was applied to a glass plate so as to have a thickness of 300 µm on a dry basis, and the coating was dried at 120°C for 1 hour. A very transparent coating film in which fine silica particles were dispersed in a silicone resin was obtained. The coating film had a light transmittance at a wavelength of 400 nm of 95%, a haze of 0.2%, and a refractive index of 1.43.

### Example 2

### (Preparation of Dispersion of Fine Titanium Oxide Particles)

In 20 g of ethanol was diluted 6.41 g of titanium tetraisopropoxide, and 0.5 g of nitric acid and 0.2 g of water were added to the dilution while stirring, and the components were reacted at 80°C for 2 hour. The solvents were distilled off, so as to have a solid content of 30% by weight, to give a dispersion of fine titanium oxide particles (average primary particle size: 20 nm).

### (Preparation of Silicone Resin Composition)

Five grams of methanol and 5 g of 2-propanol were added to 5 g of the above dispersion of fine titanium oxide particles. Five grams of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 5 g of a poly(dimethyl siloxanes) containing a methoxy group in an amount of 45% by weight (trade name: KC-89, commercially available from Shin-Etsu Chemical Co., Ltd.), which is a compound having an alkoxysilyl group at an end of a molecule, were added thereto, and the components were reacted at 80°C for 2 hours, while stirring. After the termination of the reaction, the solvents were distilled off under a reduced pressure, and the residue was concentrated to a solid content of fine titanium oxide particles of 23% by weight, to give a silicone resin composition containing fine titanium oxide particles. Here, the weight ratio of the bifunctional alkoxysilane to the compound having an alkoxysilyl group at an end of a molecule was 1/1.

### (Use)

The silicone resin composition was applied to a glass plate so as to have a thickness of 300 µm on a dry basis, and the coating was dried at 120°C for 1 hour. A very transparent coating film in which fine titanium oxide particles were dispersed in a silicone resin was obtained. The coating film had a light transmittance at a wavelength of 400 nm of 85%, a haze of 1.1%, and a refractive index of 1.47.

### Example 3

### (Preparation of Silicone Resin Composition)

In a container equipped with a stirrer, a reflux condenser, and a nitrogen inlet tube, 0.3 g of water and 1.7 g of 2-propanol were added to 1.7 g of a methanol dispersion of fine titanium oxide particles having an average primary particle size of 15 nm (trade name: NT-1089 TIV, commercially available from Catalyst & Chemicals Ind. Co., Ltd., solid content: 30% by weight). Thereto were added 0.9 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 0.9 g of a poly(dimethyl siloxanes) containing a methoxy group in an amount of 28% by weight (trade name: KR-500, commercially available from Shin-Etsu Chemical Co., Ltd.), which is a compound having an alkoxysilyl group at an end of a molecule, and the components were reacted at 60°C for 3 hours, while stirring. After the termination of the reaction, the solvents were distilled off, and the residue was concentrated to a solid content of fine titanium oxide particles of 34% by weight, to give a silicone resin composition containing fine titanium oxide particles. Here, the weight ratio of the bifunctional alkoxysilane to the compound having an alkoxysilyl group at an end of a molecule was 1/1.

### (Use)

The silicone resin composition was applied to a glass plate so as to have a thickness of 300 µm on a dry basis, and the coating was dried at 120°C for 1 hour. A very transparent coating film in which fine titanium oxide particles were dispersed in a silicone resin was obtained. The coating film had a light transmittance at a wavelength of 400 nm of 87%, a haze of 1.4%, and a refractive index of 1.46.

### Example 4

### (Preparation of Silicone Resin Composition)

In a container equipped with a stirrer, a reflux condenser, and a nitrogen inlet tube, 1.7 g of methanol and 1.7 g of 2-propanol were added to 1.7 g of an aqueous dispersion of fine zirconium oxide particles having an average primary particle size of 5 nm (trade name: NZD-3005, commercially available from Sumitomo Osaka Cement Co., Ltd., solid content: 30% by weight). Thereto were added 0.9 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 0.9 g of a poly(dimethyl siloxanes) containing a methoxy group in an amount of 45% by weight (trade name: KC-89, commercially available from Shin-Etsu Chemical Co., Ltd.), which is a compound having an alkoxysilyl group at an end of a molecule, and the components were reacted at 60°C for 3 hours, while stirring. After the termination of the reaction, the reaction mixture was cooled to room temperature, water was first distilled off, and the alcohols were subsequently distilled off, to give a silicone resin composition containing fine zirconium oxide particles having a solid content of 35% by weight. Here, the weight ratio of the bifunctional alkoxysilane to the compound having an alkoxysilyl group at an end of a molecule was 1/1.

### (Use)

The silicone resin composition was sandwiched between two glass plates so as to have a thickness of 300 µm, and the coating was dried on a hot plate at 150°C for 1 hour. A very transparent coating film in which fine zirconium oxide particles were dispersed in a silicone resin was obtained. The coating film had a light transmittance at a wavelength of 400 nm of 94%, a haze of 0.1%, and a refractive index of 1.49.

### Example 5

### (Synthesis of Compound Represented by the Formula (4))

In a container equipped with a stirrer, a reflux condenser, and a nitrogen inlet tube, 14 g of a methylhydrogen silicone oil having a hydrogen atom in a side chain (trade name: KF 9901, commercially available from Shin-Etsu Chemical Co., Ltd., functional group equivalence: 140 g/mol), 14.8 g of vinyl trimethoxysilane (trade name: KBM1003, commercially available from Shin-Etsu Chemical Co., Ltd.), and 10 g of toluene were added together. The container was subjected to nitrogen replacement sufficiently, 3 µl of a platinum catalyst was then added thereto, and the components were reacted at 80°C for 5 hours. After the termination of the reaction, the reaction mixture was cooled to room temperature, and the solvent was distilled off, to give a compound having a methoxysilyl group at an end of a molecule represented by formula (4), in which m is 2 to 3, and all of R⁵ are a methyl group.

### (Preparation of Silicone Resin Composition)

To 1.7 g of an aqueous dispersion of fine zirconium oxide particles having an average primary particle size of 5 nm (trade name: NZD-3005, commercially available from Sumitomo Osaka Cement Co., Ltd., solid content: 30% by weight) were added 1.7 g of methanol and 1.7 g of 2-propanol. Thereto were added 0.9 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 0.6 g of a poly(dimethyl siloxanes) containing a methoxy group in an amount of 45% by weight (trade name: KC-89, commercially available from Shin-Etsu Chemical Co., Ltd.), and 0.3 g of the compound represented by the formula (4) synthesized above, which are compounds having an alkoxysilyl group at an end of a molecule, and the components were reacted at 60°C for 3 hours, while stirring. After the termination of the reaction, the solvents were distilled off, and the residue was concentrated to a solid content of fine zirconium oxide particles of 34% by weight, to give a silicone resin composition containing fine zirconium oxide particles. Here, the weight ratio of the bifunctional alkoxysilane to a total amount of the compounds having an alkoxysilyl group at an end of a molecule was 1/1.

### (Use)

The silicone resin composition was applied to a glass plate so as to have a thickness of 300 µm on a dry basis, and the coating was dried at 120°C for 1 hour. A very transparent coating film in which fine zirconium oxide particles were dispersed in a silicone resin was obtained. The coating film had a light transmittance at a wavelength of 400 nm of 93%, a haze of 0.1%, and a refractive index of 1.47.

### Example 6

### (Preparation of Dispersion of Fine Barium Titanate Particles)

To 200 g of 2-propanol was dissolved 1.25 g of barium diisopropoxide. Thereto was added a solution prepared by dissolving 1.42 g of titanium isopropoxide in 100 g of 2-propanol, while stirring. Next, 0.12 g of acetyl acetone was added thereto, and the components were reacted at 80°C for 2 hours. To the reaction mixture were added 8.84 g of acetic acid, 0.135 g of water, and 300 g of 2-propanol, and the components were reacted at 80°C for 48 hours. After the termination of the reaction, the solvents were distilled off under a reduced pressure, so that the concentration of the fine barium titanate particles was adjusted to a solid content of the fine barium titanate particles of 50% by weight. Next, water was added to the concentrated mixture, and the concentration was adjusted to a solid content of the fine barium titanate particles of 30% by weight, to give a dispersion of fine barium titanate particles (average primary particle size: 40 nm).

### (Preparation of Silicone Resin Composition)

To 1.7 g of the dispersion of fine barium titanate particles were added 1.7 g of methanol and 1.7 g of 2-propanol. Thereto were added 0.9 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 0.9 g of a poly(dimethyl siloxanes) containing a methoxy group in an amount of 45% by weight (trade name: KC-89, commercially available from Shin-Etsu Chemical Co., Ltd.), which is a compound having an alkoxysilyl group at an end of a molecule, and the components were reacted at 60°C for 3 hours, while stirring. After the termination of the reaction, the solvents were distilled off, and the residue was concentrated to a solid content of fine barium titanate particles of 35% by weight, to give a silicone resin composition containing fine barium titanate particles. Here, the weight ratio of the bifunctional alkoxysilane to the compound having an alkoxysilyl group at an end of a molecule was 1/1.

### (Use)

The silicone resin composition was applied to a glass plate so as to have a thickness of 100 µm on a dry basis, and the coating was dried at 120°C for 1 hour. A very transparent coating film in which fine barium titanate particles were dispersed in a silicone resin was obtained. The coating film had a light transmittance at a wavelength of 400 nm of 80%, a haze of 1.5%, and a refractive index of 1.44.

### Example 7

### (Preparation of Dispersion of Fine Zinc Sulfide Particles)

A dispersion of fine manganese-doped zinc sulfide particles (solid content: 10% by weight) synthesized according to a co-precipitation method of a known publication (J, Lumin., 92, 73, 2001) was obtained (average primary particle size: 80 nm).

### (Preparation of Silicone Resin Composition)

Ten grams of methanol was added to 5 g of the above dispersion of fine zinc sulfide particles. Thereto were added 1.2 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 0.6 g of 3-methacryloxypropyltrimethoxysilane (trade name: KBM503, commercially available from Shin-Etsu Chemical Co., Ltd., a compound represented by formula (3), in which all of R³ are a methyl group, and R⁴ is a methacryloxypropyl group), which is a compound having an alkoxysilyl group at an end of a molecule, and the components were reacted at 60°C for 3 hours, while stirring. After the termination of the reaction, the solvents were distilled off, and the residue was concentrated to a solid content of fine zinc sulfide particles of 34% by weight, to give a silicone resin composition containing fine zinc sulfide particles. Here, the weight ratio of the bifunctional alkoxysilane to the compound having an alkoxysilyl group at an end of a molecule was 2/1.

### (Use)

A solution prepared by dissolving the silicone resin composition in a mixed solvent of methanol/tetrahydrofuran (1/1) in an amount of 20% by weight was applied to a glass plate so as to have a thickness of 300 µm on a dry basis, and the coating was dried at 120°C for 1 hour. A very transparent coating film in which fine zinc sulfide particles were dispersed in a silicone resin was obtained. The coating film obtained had a light transmittance at a wavelength of 400 nm of 82% and a haze of 1.7%. The refractive index of the coating film obtained was measured with an Abbe refractometer, and as a result, the refractive index was 1.46. In addition, the silicone resin composition was applied to a substrate mounted with blue emitting diodes with an applicator, and a coating was heated at 150°C for 2 hours, thereby encapsulating the blue emitting diodes, to give a blue emitting diode device.

### Example 8

### (Preparation of Dispersion of Fine Cerium Oxide Particles)

A dispersion of fine cerium oxide particles (solid content: 10% by weight) synthesized according to a hydrothermal synthesis method of a known publication (Chem. Lett., 35(8), 944, 2006) was obtained (average primary particle size: 45 nm) .

### (Preparation of Silicone Resin Composition)

Ten grams of methanol was added to 5 g of the above dispersion of fine cerium oxide particles. Thereto were added 1.2 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 0.6 g of (3-glycidoxypropyl)trimethoxysilane (trade name: KBM 403, commercially available from Shin-Etsu Chemical Co., Ltd., a compound represented by formula (3), in which all of R³ are a methyl group, and R⁴ is a glycidoxypropyl group), which is a compound having an alkoxysilyl group at an end of a molecule, and the components were reacted at 60°C for 3 hours, while stirring. After the termination of the reaction, the solvents were distilled off, and the residue was concentrated to a solid content of fine cerium oxide particles of 35% by weight, to give a silicone resin composition containing fine cerium oxide particles. Here, the weight ratio of the bifunctional alkoxysilane to the compound having an alkoxysilyl group at an end of a molecule was 2/1.

### (Use)

A solution prepared by dissolving the silicone resin composition in a mixed solvent of methanol/tetrahydrofuran (1/1) in an amount of 80% by weight was applied to a glass plate so as to have a thickness of 100 µm on a dry basis, and the coating was dried at 120°C for 1 hour. A very transparent coating film in which fine cerium oxide particles were dispersed in a silicone resin was obtained. The coating film had a light transmittance at a wavelength of 400 nm of 80%, a haze of 2.1%, and a refractive index of 1.44.

### Example_9

### (Preparation of Silicone Resin Composition)

In a container equipped with a stirrer, a reflux condenser, and a nitrogen inlet tube, 1.7 g of methanol and 1.7 g of 2-propanol were added to 1.7 g of an aqueous dispersion of fine zinc oxide particles having an average primary particle size of 15 nm (trade name: ZW-143, commercially available from Sumitomo Osaka Cement Co., Ltd., solid content: 30% by weight). Thereto were added 0.9 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 0.9 g of 2-((3,4)-epoxycyclohexyl)ethyltrimethoxysilane (trade name: KBM 303, commercially available from Shin-Etsu Chemical Co., Ltd., a compound represented by formula (3), in which all of R³ are a methyl group, and R⁴ is an epoxycyclohexylethyl group), which is a compound having an alkoxysilyl group at an end of a molecule, and the components were reacted at 60°C for 3 hours, while stirring. After the termination of the reaction, the solvents were distilled off, and the residue was concentrated to a solid content of fine zinc oxide particles of to 34% by weight, to give a silicone resin composition containing fine zinc oxide particles. Here, the weight ratio of the bifunctional alkoxysilane to the compound having an alkoxysilyl group at an end of a molecule was 1/1.

### (Use)

A solution prepared by dissolving the silicone resin composition in a mixed solvent of methanol/tetrahydrofuran (1/1) in an amount of 80% by weight was applied to a glass plate so as to have a thickness of 300 µm on a dry basis, and the coating was dried at 120°C for 1 hour. A very transparent coating film in which fine zinc oxide particles were dispersed in a silicone resin was obtained. The coating film obtained had a light transmittance at a wavelength of 400 nm of 85%, a haze of 1.5%, and a refractive index of 1.44.

### Example 10

### (Preparation of Dispersion of Fine Iron Oxide Particles)

In 150 ml of deionized water were dissolved 1.85 g of FeCl₂-nH₂O (commercially available from Aldrich) and 5.0 g of FeCl₃-6H₂O (commercially available from Aldrich). One-hundred fifty milliliters of a 6 mol/l aqueous ammonia was added dropwise thereto, while stirring. The water was distilled off, to give a dispersion of fine iron oxide particles (solid content: 15% by weight) (average primary particle size: 20 nm).

### (Preparation of Silicone Resin Composition)

Ten grams of ethanol was added to 5 g of the above dispersion of fine iron oxide particles, and thereto were added 1.5 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], and 0.8 g of (3-aminopropyl)trimethoxysilane [trade name: KBM 903, commercially available from Shin-Etsu Chemical Co., Ltd., a compound represented by formula (3), in which all of R³ are a methyl group, and R⁴ is an aminopropyl group], which is a compound having an alkoxysilyl group at an end of a molecule, and the components were reacted at 60°C for 3 hours, while stirring. After the termination of the reaction, the solvents were distilled off, and the residue was concentrated to a solid content of fine iron oxide particles of to 41% by weight, to give a silicone resin composition containing fine iron oxide particles. Here, the weight ratio of the bifunctional alkoxysilane to the compound having an alkoxysilyl group at an end of a molecule was 1.9/1.

### (Use)

A solution prepared by dissolving the silicone resin composition in a mixed solvent of methanol/tetrahydrofuran (1/1) in an amount of 80% by weight was applied to a glass plate so as to have a thickness of 300 µm on a dry basis, and the coating was dried at 120°C for 1 hour. A very transparent coating film in which fine iron oxide particles were dispersed in a silicone resin was obtained. The coating film had a light transmittance at a wavelength of 600 nm of 89%, a haze of 2.5%, and a refractive index of 1.42.

### Example 11

### (Preparation of Silicone Resin Composition)

In a container equipped with a stirrer, a reflux condenser, and a nitrogen inlet tube, 1.7 g of methanol and 1.7 g of 2-propanol were added to 1.7 g of an aqueous dispersion of fine zirconium oxide particles having an average primary particle size of 5 nm (trade name: NZD-3005, commercially available from Sumitomo Osaka Cement Co., Ltd., solid content: 30% by weight). Thereto were added 0.9 g of a disilanol derivative [trade name: X-21-3153, commercially available from Shin-Etsu Chemical Co., Ltd., a dual end-disilanol represented by formula (2), in which n is 2], and 0.9 g of a poly(dimethyl siloxanes) containing a methoxy group in an amount of 24% by weight (trade name: X-40-9225, commercially available from Shin-Etsu Chemical Co., Ltd.), which is a compound having an alkoxysilyl group at an end of a molecule, and the components were reacted at 60°C for 3 hours, while stirring. After the termination of the reaction, the reaction mixture was cooled to room temperature, water was first distilled off, and the alcohols were subsequently distilled off, to give a silicone resin composition containing fine zirconium oxide particles having a solid content of 25% by weight. Here, the weight ratio of the disilanol derivative to the compound having an alkoxysilyl group at an end of a molecule was 1/1.

### (Use)

The silicone resin composition was sandwiched between two glass plates so as to have a thickness of 300 µm, and the coating was dried at 150°C for 1 hour on a hot plate. A very transparent coating film in which fine zirconium oxide particles were dispersed in a silicone resin was obtained. The coating film had a light transmittance at a wavelength of 400 nm of 97%, a haze of 0.1%, and a refractive index of 1.46.

### Example 12

### (Preparation of Silicone Resin Composition)

In a container equipped with a stirrer, a reflux condenser, and a nitrogen inlet tube, 1.7 g of methanol and 1.7 g of 2-propanol were added to 1.7 g of an aqueous dispersion of fine zirconium oxide particles having an average primary particle size of 5 nm (trade name: NZD-3005, commercially available from Sumitomo Osaka Cement Co., Ltd., solid content: 30% by weight). Thereto were added 0.6 g of a bifunctional alkoxysilane dimethyldimethoxysilane [trade name: KBM22, commercially available from Shin-Etsu Chemical Co., Ltd., a compound of the formula (1), in which each of R¹ and R² is a methyl group, and each of X¹ and X² is a methyl group], 0.4 g of a disilanol derivative [trade name: X-21-3153, commercially available from Shin-Etsu Chemical Co., Ltd., a dual end-disilanol represented by formula (2), in which n is 2], and 0.9 g of a poly(dimethyl siloxanes) containing a methoxy group in an amount of 28% by weight (trade name: KR-500, commercially available from Shin-Etsu Chemical Co., Ltd.), which is a compound having an alkoxysilyl group at an end of a molecule, and the components were reacted at 60°C for 3 hours, while stirring. After the termination of the reaction, the reaction mixture was cooled to room temperature, water was first distilled off, and the alcohols were subsequently distilled off, to give a silicone resin composition containing fine zirconium oxide particles having a solid content of 28% by weight. Here, the weight ratio of a total amount of the bifunctional alkoxysilane and the disilanol derivative to the compound having an alkoxysilyl group at an end of a molecule was 1/1.

### (Use)

The silicone resin composition was sandwiched between two glass plates so as to have a thickness of 300 µm on a dry basis, and the coating was dried at 150°C for 1 hour on a hot plate. A very transparent coating film in which fine zirconium oxide particles were dispersed in a silicone resin was obtained. The coating film had a light transmittance at a wavelength of 400 nm of 96%, a haze of 0.1 %, and a refractive index of 1.44.

### (Evaluations)

The light transmittance, the haze, or the refractive index was evaluated in accordance with the following methods.

### (Light Transmittance)

The light transmittance at a wavelength of 400 nm or 600 nm was determined for the coating films obtained in Examples 1 to 12 with a spectrophotometer (U-4100, commercially available from Hitachi High-Technologies Corporation).

### (Haze)

The haze was determined for the coating films obtained in Examples 1 to 12 with a haze and reflectometer (HR-100, commercially available from MURAKAMI COLOR RESEARCH LABORATORY).

### (Refractive Index)

The refractive index was determined for the coating films obtained in Examples 1 to 12 with an Abbe refractometer (Model NAR-1T, commercially available from ATAGO CO., LTD.) at 25°C.

The silicone resin composition of the present invention can be suitably used for, for example, encapsulating materials, coating materials, molding materials, surface-protecting materials, adhesive agents, bonding agents, and the like.

The present invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A silicone resin composition comprising fine inorganic particles, wherein the silicone resin composition is obtainable by a step comprising reacting (A) a bifunctional alkoxysilane and/or a dual end-disilanol, and (B) a compound having an alkoxysilyl group at an end of a molecule, in the presence of a dispersion of said fine inorganic particles.

2. The silicone resin composition according to claim 1, wherein the bifunctional alkoxysilane is a compound represented by the formula (1): 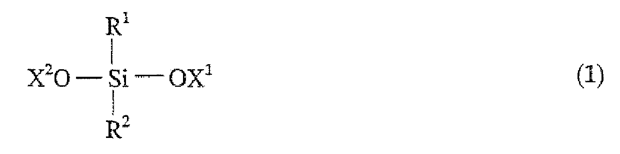 wherein each of R¹ and R² is independently an alkyl group or a phenyl group, and each of X¹ and X² is independently an alkyl group.

3. The silicone resin composition according to claim 1 or 2, wherein the dual end-disilanol is a compound represented by the formula (2): 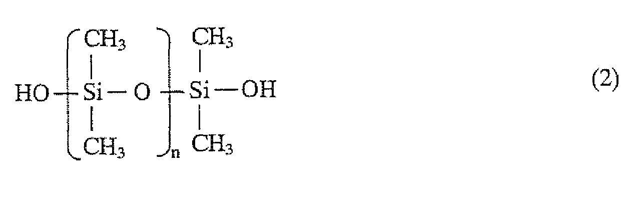 wherein n is an integer of 1 or more.

4. The silicone resin composition according to any one of claims 1 to 3, wherein the compound having an alkoxysilyl group at an end of a molecule is at least one compound selected from the group consisting of poly(dimethyl siloxanes) containing a methoxy group in an amount of from 10 to 50% by weight,
compounds represented by the formula (3): 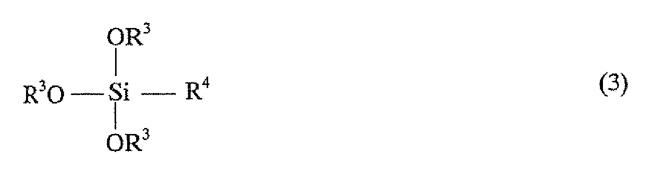 wherein each of R³, which may be identical or different, is a C1-4 alkyl group, and R⁴ is a monovalent organic group, and
compounds represented by the formula (4): 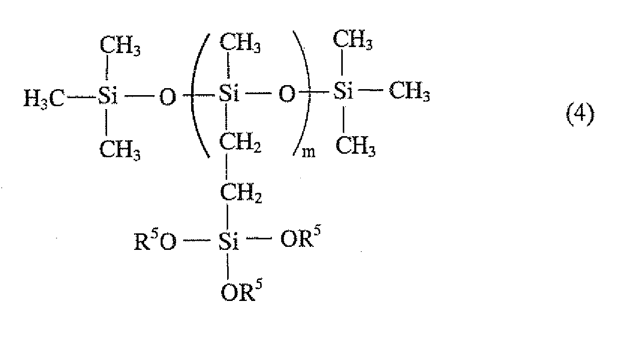 wherein each of R⁵, which may be identical or different, is a C1-4 alkyl group, and m is an integer of 1 or more.

5. The silicone resin composition according to any one of claims 1 to 4, wherein the fine inorganic particles are particles of one or more compounds selected from the group consisting of silica, titanium oxide, zirconium oxide, barium titanate, lithium niobate, cadmium selenide, copper oxide, hematite, iron oxide, alumina, zinc oxide, chromium oxide, niobium oxide, alumina-titania mixed oxide, alumina-zirconia mixed oxide, iron titanate, iron silicate, cerium oxide, manganese oxide, tin oxide, barium zirconate, zinc sulfide, cadmium sulfide/cadmium selenide, and lithium cobalt oxide.
